# FASCICULE DE BREVET EUROPEEN

(11) **EP 3 080 889 B1**
(45) Date de publication et mention de la délivrance du brevet: **15.11.2017**
(21) Numéro de dépôt: 14806576.6
(22) Date de dépôt: 26.11.2014
(51) Int. Cl.: B60L 11/18, H02J 7/02, H02J 7/00

(54) **SYSTÈME ET PROCÉDÉ D'ÉQUILIBRAGE DE LA CHARGE D'UNE PLURALITÉ DE MODULES DE STOCKAGE D'ÉNERGIE**
SYSTEM UND VERFAHREN ZUM AUSGLEICHEN DER LADUNG MEHRERER STROMSPEICHERMODULE
SYSTEM AND METHOD FOR BALANCING THE CHARGE OF A PLURALITY OF ENERGY STORAGE MODULES

(30) Priorité: 10.12.2013 FR 1362358
(43) Date de publication de la demande: 19.10.2016
(73) Titulaire: IFP Energies nouvelles, 92500 Rueil-Malmaison (FR)
(72) Inventeur: POGNANT-GROS, Philippe, F-69340 Francheville (FR); OLSZEWSKI, Dimitri, F-78170 La Celle Saint Cloud (FR)
(86) Numéro de dépôt international: PCT/EP2014/075649
(87) Numéro de publication internationale: WO 2015/086321

(56) Documents cités:
- US-A1- 2004 135 545
- US-A1- 2012 068 665

## Description

La présente invention concerne le domaine de l'équilibrage de la charge des batteries électriques, en particulier pour véhicules automobiles électriques ou hybrides.

Lorsqu'une batterie est utilisée notamment dans un véhicule électrique ou hybride, les cellules constituant la batterie (ou un module de stockage de l'énergie électrique) subissent des cycles de charge et de décharge. La dispersion des caractéristiques des différentes cellules, notamment le rendement faradique, provoque au cours de la vie de la batterie des déséquilibres de charge. Or les cellules doivent rester dans une plage de fonctionnement bien définie.

Afin de maintenir la capacité de la batterie tout en prolongeant sa durée de vie et son utilisation en toute sécurité, l'équilibrage des différentes cellules constituant la batterie s'avère indispensable. L'équilibrage consiste à transférer des charges entre les cellules afin qu'elles aient toutes le même état de charge (SOC de l'anglais State of Charge) et le même niveau de tension. En effet, dès qu'une cellule sort de sa plage de fonctionnement, c'est toute la batterie qui en pâtit. Pour maintenir les meilleures performances de la batterie, le système d'équilibrage doit intervenir au niveau de chaque cellule. Pour que le système d'équilibrage soit efficace, il faut connaître l'état de charge de chaque cellule.

Dans la littérature, plusieurs solutions sont proposées pour assurer l'équilibrage des cellules d'une batterie. Ces solutions peuvent être classées en deux familles : dissipatives et non dissipatives.

Dans le cas de la première famille, la mise en oeuvre est simple : une partie de l'énergie des cellules les plus chargées est dissipée, par exemple dans une résistance, ce qui diminue l'état de charge de ces cellules et à fortiori de la batterie. Aujourd'hui, les packs ou modules de batteries disposent majoritairement de système d'équilibrage passif. Ces systèmes sont constitués d'une résistance commutée par des semi-conducteurs et permettent ainsi sur demande du Battery Management System (BMS pouvant être traduit par système de gestion de batterie) de décharger les cellules les plus chargées en dissipant par effet joules l'énergie transitée. Ce système implique de mettre à niveau énergétiquement les cellules les plus chargées par rapport aux cellules les moins chargées du pack ou module. Ce système est généralement activé uniquement pendant les phases de charge hors utilisation du pack ou du module afin de ne pas pénaliser l'énergie disponible pour l'application consommatrice. Ce système présente également l'inconvénient de chauffer et ne pas être efficace pour des applications très contraintes en temps d'équilibrage et/ou en niveau d'énergie de déséquilibre.

Afin de s'affranchir de ces contraintes et par opposition aux systèmes passifs, des systèmes dits actifs ou non dissipatifs sont utilisés. Ceux-ci présentent l'avantage de ne pas évacuer par effet joules l'énergie du déséquilibre mais de la stocker puis de la restituer dans le pack ou le module.

Dans la famille des systèmes actifs, on distingue également deux catégories de stockage de l'énergie, les systèmes dits capacitifs et inductifs. Par exemple, les demandes de brevet WO 2013/035238, WO 2012/040496 et WO 2008/115538 décrivent des systèmes d'équilibrage inductif mutualisé.

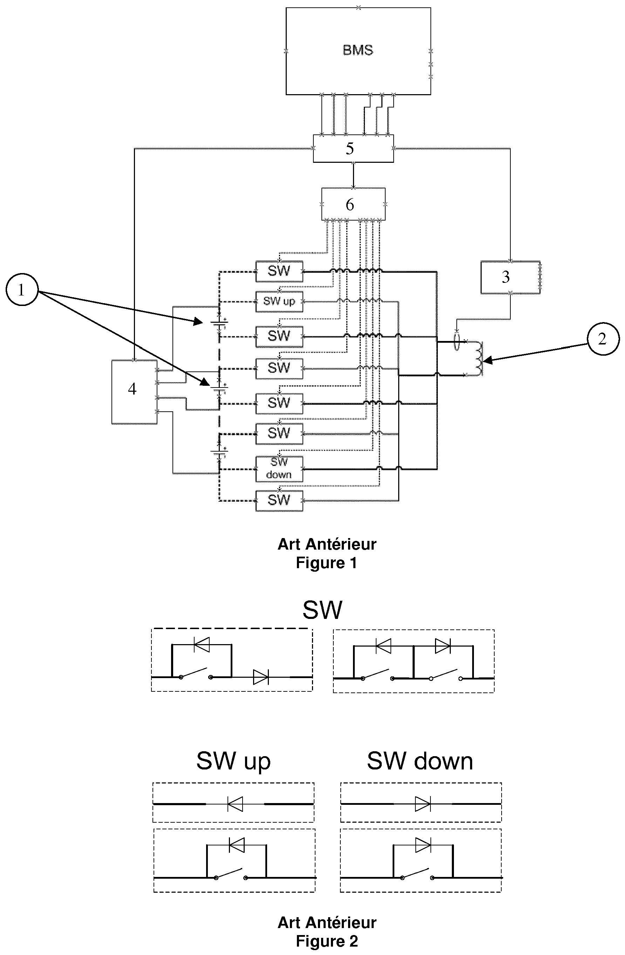

L'exemple de réalisation détaillé à la figure 1 concerne une structure d'équilibrage dite à inductance mutualisée. La figure 1 est composée de trois cellules en série, à titre d'illustration fonctionnelle, il est bien entendu qu'un nombre plus important de cellules branchées en série et en parallèle sont applicables. Cette structure connue de l'homme de l'art présente comme principal intérêt de mutualiser le composant qui emmagasine l'énergie du déséquilibre. Cette structure est également intéressante car elle ne nécessite pas un circuit de commande très complexe de par le fait que l'énergie emmagasinée dans l'inductance au travers d'une cellule est restituée dans toutes les cellules du module.

La structure est composée des éléments suivants, comme illustré dans la figure 1 :
- plusieurs cellules électrochimiques 1 constituant la batterie (ou module),
- un système de gestion de batterie BMS,
- une ou plusieurs inductances 2, en série, de stockage de l'énergie,
- des interrupteurs commandés SW, SW up, SW down, par exemple des semi-conducteurs, de préférence unidirectionnels en courant, les interrupteurs commandés ou non SW, SW up et SW down peuvent être réalisés à l'aide par exemple de Mosfets et de diodes de puissances, des exemples de mise en oeuvre de ces interrupteurs commandés sont illustrées sur la figure 2, ces interrupteurs commandés Sw, SW up et SW down étant disposés entre une cellule 1 et l'inductance 2,
- un circuit de commande des interrupteurs 6,
- un circuit de mesure de la tension 4 différentielle des cellules,
- un circuit de mesure du courant 3 dans la ou les inductances,
- une logique de sélection 5 de la cellule à décharger.

La séquence de fonctionnement du système d'équilibrage est la suivante :
- étape 1 : Réception d'une autorisation d'équilibrage provenant du BMS,
- étape 2 : Mesure des tensions différentielles des cellules 1,
- étape 3 : Détermination de la cellule 1 la plus chargée,
- étape 4 : Commande de fermeture des interrupteurs "SW" de la cellule 1 la plus chargée sélectionnée,
- étape 5 : Décharge de la cellule 1 la plus chargée sélectionnée dans l'inductance 2 jusqu'à Imax choisi (paramètre ajustable),
- étape 6 : Commande d'ouverture des interrupteurs "SW" de la cellule 1 la plus chargée sélectionnée,
- étape 7 : Décharge de l'inductance 2 en totalité dans toutes les cellules 1 du module (ou pack),
- étape 8 : On recommence à l'étape 2 jusqu'à détection de l'équilibrage de toutes les cellules ou que le BMS demande un arrêt.

Dans une variante de réalisation, les étapes 4 à 7 peuvent être réalisées plusieurs fois avant de revenir à l'étape 2. Cela peut être intéressant si la variation de la tension de la cellule déchargée sur un cycle (charge + décharge) est très faible et donc imperceptible par la chaine d'acquisition des tensions cellules.

Dans une autre variante de réalisation, il est possible de faire évoluer le courant max "Imax" traversant l'inductance. Cela peut être avantageux pour rendre la conception plus robuste notamment lorsque l'on atteint des conditions limites de fonctionnement, comme par exemple lorsque la température ambiante est déjà très élevée.

Pour différentes applications des batteries, il est courant de coupler plusieurs modules ou packs, notamment en parallèle. Concernant la parallélisation de packs ou de modules, les systèmes présents sur le marché sont principalement des systèmes commutés manuels ou semi-automatisés très contraints dans leur utilisation. Cette parallélisation de packs ou modules est implémentée dès lors que l'on souhaite augmenter la puissance et/ou l'énergie disponible du pack ou module initial. L'automatisation de cette fonction est intéressante dès lors que c'est l'utilisateur et non un technicien qualifié qui doit effectuer cette opération. Lorsque plusieurs modules ou packs sont parallélisés, il est nécessaire d'égaliser au préalable leur niveau de tension et donc implicitement leur niveau d'état de charge (SOC), afin d'effectuer l'opération de connexion électrique dans de bonnes conditions, notamment en évitant qu'un courant de décharge transitoire trop important ne vienne endommager voire mettre en péril les modules ou packs. Toutefois, les systèmes d'équilibrage actifs permettent uniquement l'équilibrage des cellules d'un module mais pas l'équilibrage de plusieurs modules couplés ou de cellules appartenant à des modules couplés.

L'invention concerne un système d'équilibrage actif de plusieurs modules couplés, les modules étant contrôlés soit en tant que module maître à décharger soit en tant que module esclave à charger et l'équilibrage étant mis en oeuvre par la charge d'un élément de stockage magnétique du module maître. L'invention propose au travers de structures électroniques et de techniques de commande, d'une part de mutualiser les fonctions d'équilibrage et de couplage à moindre coût et ajouts de composants, et d'autre part, d'améliorer voire d'annuler les limitations décrites précédemment. On identifie ici le document US 2004/135545 A1 qui décrit un système d'équilibrage selon le préambule des revendications indépendantes 1 et 10.

### Le système et le procédé selon l'invention

L'invention concerne un système d'équilibrage de la charge d'au moins deux modules de stockage d'énergie électrique couplés, chaque module comprenant au moins une cellule électrochimique, des moyens d'équilibrage comprenant au moins un élément de stockage magnétique, et des moyens de couplage aux autres modules. Chaque moyen de couplage comprend des moyens de contrôle permettant de contrôler ledit module soit en tant que module maître à décharger, soit en tant que module esclave à charger, de manière à ce que la charge d'au moins une cellule dudit module esclave soit réalisée par la décharge d'au moins une cellule dudit module maître au moyen dudit élément de stockage magnétique dudit module maître.

Selon l'invention, chaque moyen de contrôle des modules comprend deux commutateurs, la fermeture de chaque commutateur permettant le passage du courant dans un seul sens pour permettre soit la charge, soit la décharge dudit module.

Avantageusement, ledit système d'équilibrage comprend en outre des moyens de communication entre lesdits modules.

De préférence, lesdits moyens de couplage comprennent des contacteurs principaux et un contacteur secondaire.

De plus, lesdits moyens de couplage peuvent comprendre des bornes de connexion.

Selon un aspect de l'invention, chaque module comprend en outre un système de gestion de batterie qui contrôle l'équilibrage de la charge.

Selon un mode de réalisation de l'invention, lesdits moyens d'équilibrage sont des moyens d'équilibrage à inductance mutualisée qui comprennent des moyens de commutation actionnés pour la charge ou la décharge, lesdits moyens de commutation étant disposés entre une cellule et ladite inductance mutualisée.

Alternativement, ledit élément de stockage magnétique comprend au moins un transformateur.

L'invention concerne également un véhicule hybride ou électrique, notamment véhicule automobile, comportant un système d'équilibrage selon l'invention.

En outre, l'invention concerne un procédé d'équilibrage de la charge d'au moins deux modules de stockage d'énergie électrique couplés, chaque module comprenant au moins une cellule électrochimique, des moyens d'équilibrage comprenant au moins un élément de stockage magnétique, et des moyens de couplage aux autres modules. Pour le procédé, on réalise les étapes suivantes :
a) on identifie au moins un module à charger et un module à décharger ;
b) on contrôle ledit module à décharger en tant que module maître et ledit module à charger en tant que module esclave ; et
c) on effectue l'équilibrage par la charge d'au moins une cellule dudit module esclave par la décharge d'au moins une cellule dudit module maître au moyen dudit élément de stockage magnétique dudit module maître.

Selon l'invention, on identifie ledit module à charger ou à décharger par mesure et comparaison de la tension de chaque module.

De préférence, on identifie au moins la cellule la plus chargée dudit module maître et on effectue l'équilibrage au moyen de la charge d'au moins une cellule dudit module esclave par la décharge de ladite cellule la plus chargée dudit module maître.

Avantageusement, on contrôle lesdits modules en tant que module esclave et module maître par actionnement de moyens de commutation intégrés dans lesdits moyens de couplage de chaque module.

Selon un aspect de l'invention, on répète l'étape c) jusqu'à l'équilibrage desdites cellules.

### Présentation succincte des figures

D'autres caractéristiques et avantages du procédé selon l'invention, apparaîtront à la lecture de la description ci-après d'exemples non limitatifs de réalisations, en se référant aux figures annexées et décrites ci-après.
La figure 1, déjà décrite, illustre un système d'équilibrage à inductance mutualisée d'un module selon l'art antérieur.
La figure 2, déjà décrite, illustre les types d'interrupteur du système d'équilibrage de la figure 1.
La figure 3 illustre un exemple de système d'équilibrage selon l'invention pour deux modules couplés.
La figure 4 illustre les types d'interrupteur du système d'équilibrage de la figure 3.
Les figures 5 et 6 illustrent deux systèmes d'équilibrage avec transformateurs pour un module pour un système d'équilibrage selon l'invention.

### Description détaillée de l'invention

La présente invention concerne l'équilibrage de la charge de systèmes de stockage d'énergie électrique constitués notamment de cellules électrochimiques, de cartes électroniques de puissance et de signal ainsi que d'équipements électrotechniques et de gestion du refroidissement, le tout étant enfermé dans un compartiment étanche ou non. Ce type de système de stockage d'énergie électrique est connu sous le nom de pack batteries ou module batteries suivant le niveau d'énergie et/ou de tension embarquées. Un pack est généralement constitué de plusieurs modules.

L'invention concerne spécifiquement des systèmes électroniques d'équilibrage et de couplage (parallélisation) de packs ou modules batteries. Dans la suite de la description, le terme module est utilisé pour désigner de manière générale un module ou un pack.

Chaque module comporte :
- au moins une cellule, de préférence plusieurs cellules électrochimiques de stockage d'énergie électrique,
- des moyens de couplage aux autres modules,
- un système de gestion de batterie (BMS), et
- des moyens d'équilibrage actifs (par exemple selon la structure décrite à la figure 1).

Selon l'invention, chacun des moyens de couplage comportent des moyens de contrôle des modules. Les moyens de contrôle des modules permettent de contrôler le module soit en tant que module maître soit en tant que module esclave. De préférence, on contrôle un seul module en tant que module maître, les autres modules étant contrôlés en tant que modules esclaves. Le module maître est le module qui se décharge pour permettre le chargement des modules moins chargés. Les modules esclaves sont ceux qui sont chargés par le module maître. Ainsi, le couplage et l'équilibrage des modules sont mutualisés et réalisés sans modification importante des modules.

Les moyens de contrôle des modules peuvent comprendre des moyens de commutation commandés permettant de rendre le module maître ou esclave. Selon un mode de réalisation de l'invention, les moyens de commutation comportent notamment deux interrupteurs commandés, chacun des interrupteurs laissant le passage du courant dans un seul sens, soit dans le sens permettant la charge du module (cas des modules esclaves) soit dans le sens permettant la décharge du module (cas du module maître).

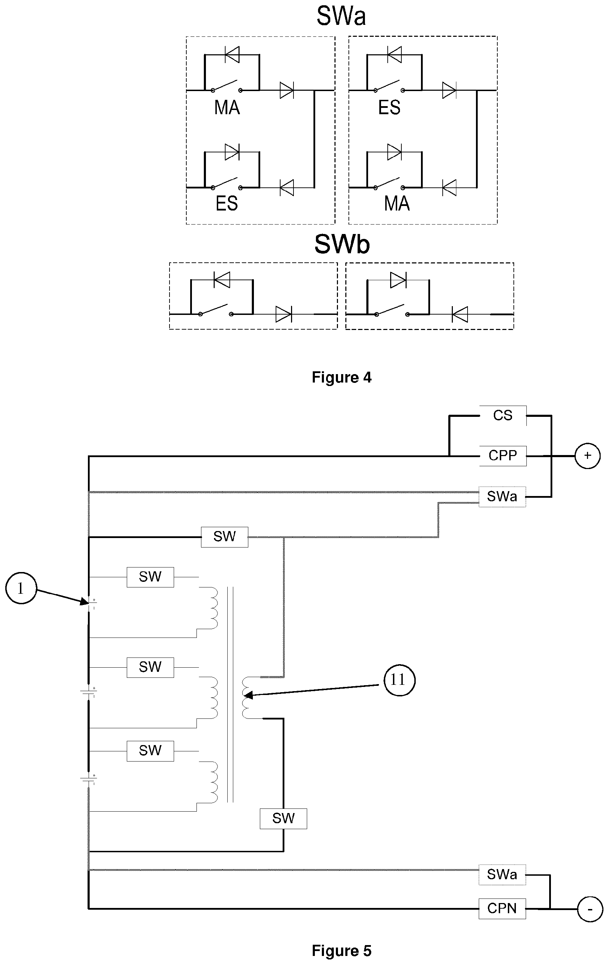

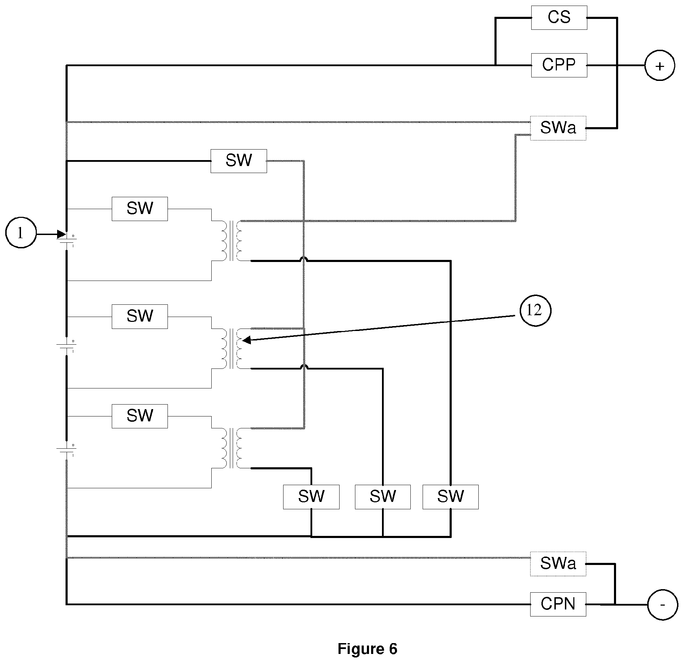

Selon l'invention, les moyens d'équilibrage actifs du module comprennent au moins un élément de stockage magnétique. L'élément de stockage magnétique peut se présenter sous la forme d'un bobinage, qui va stocker temporairement de l'électricité (en provenance du module à décharger) pour se décharger par la suite dans au moins une cellule (du module à charger). L'élément de stockage magnétique peut être notamment une inductance, un transformateur.... Selon un premier exemple de réalisation, les moyens d'équilibrage actifs ont une structure à inductance mutualisée telle qu'illustrée à la figure 1. Selon un deuxième aspect de l'invention, les moyens d'équilibrage actifs ont une structure à transformateurs, telle qu'illustrée aux figures 5 et 6.

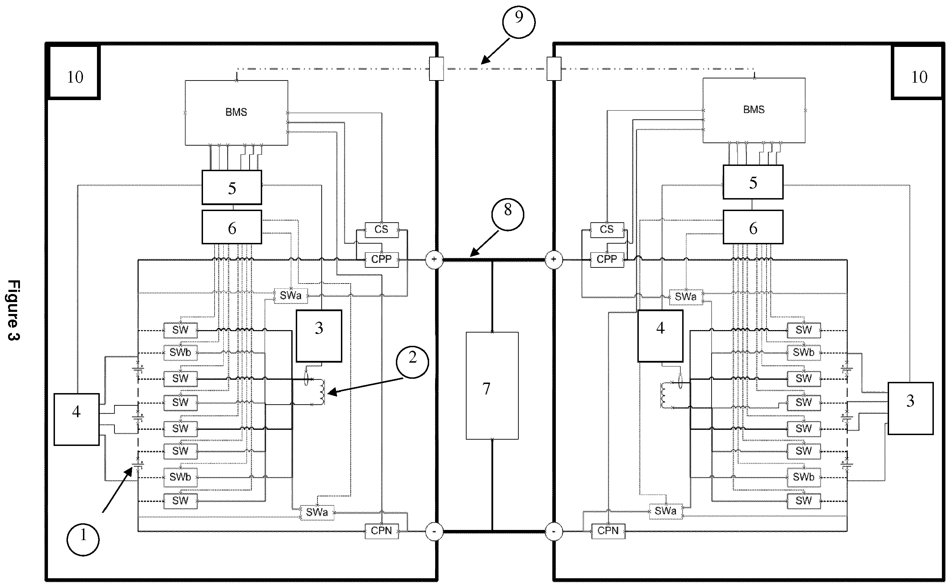

La figure 3 illustre un exemple non limitatif de système d'équilibrage selon l'invention pour deux modules couplés (le nombre de module n'est pas limité) avec structure d'équilibrage à inductance mutualisée. Pour cet exemple, chaque module 10 comprend classiquement :
- trois cellules électrochimiques 1 montées en série (ce nombre n'est pas limitatif, le système d'équilibrage selon l'invention peut comprendre deux ou plus de trois cellules et le nombre de cellules peut varier d'un module à l'autre),
- des moyens d'équilibrage à inductance mutualisée, tels qu'illustrés en figure 1, comprenant :
   ∘ au moins une inductance mutualisée 2 de stockage d'énergie,
   ∘ des interrupteurs commandés SW et SWb, par exemple des semi-conducteurs, de préférence unidirectionnels en courant, des exemples de mise en oeuvre de ces interrupteurs commandés pouvant être réalisés à l'aide par exemple de Mosfets et de diodes de puissances, les interrupteurs commandés SW et SWb étant disposés entre une cellule 1 et l'inductance mutualisée 2
   ∘ un circuit de mesure du courant 3 dans l'inductance mutualisée 2,
   ∘ un circuit de mesure 4 de la tension des cellules 1,
   ∘ des moyens de commande de l'équilibrage constitués notamment d'un circuit de commande 6 des interrupteurs commandés SW, SWa et SWb, et d'une logique de sélection 5 de la cellule à décharger, et
- un système de gestion de batterie BMS.

La structure à inductance mutualisée est connue de l'homme de l'art et présente comme principal intérêt de mutualiser le composant qui emmagasine l'énergie du déséquilibre. Cette structure est également intéressante car elle ne nécessite pas un circuit de commande très complexe de par le fait que l'énergie emmagasinée dans l'inductance au travers d'une cellule est restituée dans toutes les cellules du module. Néanmoins d'autres structures de moyens d'équilibrage, notamment à transformateurs, sont également concernées par l'invention.

Pour la mutualisation du couplage et de l'équilibrage selon l'invention, chaque module comprend en outre :
- des moyens de communication 9 entre les modules, notamment entre les systèmes de gestion de batterie BMS des modules,
- des moyens de couplage comportant notamment des contacteurs principaux CPP et CPN, et secondaires CS pour la précharge du module. Les contacteurs CPP et CPN permettent d'isoler électriquement le module du réseau électrique et cela pour des besoins fonctionnel et dysfonctionnel du module, le contacteur CS de précharge permet quant à lui de charger doucement les condensateurs du réseau électrique afin de ne pas les stresser. Cette opération de précharge est réalisée avant la fermeture des contacteurs principaux et des bornes de connexion + et - au moyen desquelles les modules sont montés en parallèle et sur lesquelles on peut monter un dispositif électrique 7, notamment une machine électrique, les contacteurs principaux CPP et CPN sont reliés aux extrémités du montage en série des cellulles, respectivement aux pôles positif et négatif, le contacteur secondaire est placé en parallèle du contacteur principal CPP, et les bornes de connexion + et - sont montées en série avec les contacteurs principaux CPP et CPN, et
- des moyens de contrôle comprenant des moyens de commutation SWa, afin de contrôler le module en tant que module esclave ou module maître.

Ainsi, les moyens d'équilibrage à inductance mutualisée permettent l'équilibrage au sein d'un module et entre les modules.

La figure 4 illustre les circuits des commutateurs commandés SWa et SWb selon un mode de réalisation de l'invention. Le commutateur commandé SWa comprend deux parties de circuit, une première partie MA permettant de contrôler le module en tant que module maître en fermant l'interrupteur et laissant passer le courant dans un sens au moyen d'une diode et une deuxième partie ES permettant de contrôler le module en tant que module esclave en fermant l'interrupteur et laissant passer le courant dans un seul sens au moyen d'une diode. A noter que le commutateur SWa connecté sur la borne - du module, dispose d'une inversion de désignation MA et ES, pour des raisons évidentes de circulation du courant entre la borne + et - du module. De plus, selon l'invention, les interrupteurs SW up et SW down des moyens d'équilibrage à inductance mutualisée telle qu'illustré à la figure 2 ont été remplacés par les interrupteurs SWb illustrés sur la figure 4.

Cet exemple de réalisation n'est pas limitatif, il pourrait y avoir un troisième pack ou module, le contacteur CPN pourrait être absent, etc...

Le module maître pilote son module uniquement afin d'assurer les transferts d'énergie. Le module esclave quant à lui est passif, après qu'il est été configuré dans ce mode ; il n'a pas besoin d'être piloté pour recevoir l'énergie.

Les figures 5 et 6 illustrent deux variantes de réalisation de l'invention, pour lesquelles les moyens d'équilibrage actifs comprennent au moins un transformateur. Sur ces figures, un seul module a été représenté et les moyens de commande, les moyens de mesure, les moyens de communication et le BMS, identiques au mode de réalisation de la figure 4 ne sont pas illustrés. Pour ces variantes de réalisation, au moins une cellule du module maître se décharge dans le transformateur, puis l'énergie stockée dans le transformateur permet de charger le module esclave.

Pour la réalisation de la figure 5, les cellules 1 sont reliées à un transformateur unique 11 au moyen d'interrupteurs SW. De manière identique au mode de réalisation de la figure 4, le système d'équilibrage comporte des moyens de contrôle des modules SWa (notamment par des interrupteurs commandés), des contacteurs principaux CPP et CPN ainsi qu'un contacteur secondaire CS.

Pour la réalisation de la figure 6, chaque cellules est reliée à un transformateur 12 au moyen d'interrupteurs SW. De manière identique au mode de réalisation de la figure 4, le système d'équilibrage comporte des moyens de contrôle des modules SWa (notamment par des interrupteurs commandés), des contacteurs principaux CPP et CPN ainsi qu'un contacteur secondaire CS.

Les convertisseurs d'équilibrage selon l'invention sont utilisables pour tous les types de batterie, mais sont particulièrement adaptés aux batteries lithium-ion. En effet, une charge mal maîtrisée pour cette technologie peut conduire à la destruction de l'accumulateur.

L'invention peut être embarquée à bord de véhicules électriques ou hybrides comprenant une batterie, les véhicules étant notamment des véhicules automobiles, deux-roues, avions, bateaux, ou véhicules du type aéroglisseur.

En outre, l'invention concerne un procédé d'équilibrage de la charge d'au moins deux modules couplés. Chaque module comprenant au moins une cellule électrochimique, des moyens d'équilibrage avec un élément de stockage magnétique (inductance, transformateur...), et des moyens de couplage aux autres modules. Pour le procédé, on réalise les étapes suivantes :
a) on identifie au moins un module à charger et au moins un module à décharger, par exemple, on identifie ledit module à charger ou à décharger par mesure et comparaison de la tension de chaque module ;
b) on contrôle ledit module à décharger en tant que module maître et ledit module à charger en tant que module esclave, par exemple, on contrôle lesdits modules en tant que module esclave et module maître par actionnement de moyens de commutation intégrés dans lesdits moyens de couplage de chaque module ; et
c) on effectue l'équilibrage par la charge d'au moins une cellule dudit module esclave par la décharge d'au moins une cellule dudit module maître au moyen de l'élément de stockage magnétique (par exemple l'inductance mutualisée) dudit module maître.

Cette étape peut être répétée de manière à équilibrer la charge de toutes les cellules de tous les modules ou jusqu'à ce que le module maître ne soit plus le module le plus chargé ou jusqu'à une réception d'une demande d'arrêt du système de gestion de batterie du module maître.

De préférence, on décharge une seule cellule du module maître dans une pluralité ou la totalité des cellules du module esclave. Selon un mode de réalisation de l'invention, on identifie au moins la cellule la plus chargée du module maître et on effectue l'équilibrage au moyen de la charge d'au moins une cellule du module esclave par la décharge de la cellule la plus chargée du module maître.

Le procédé selon l'invention peut être adapté au système tel que décrit ci-dessus, notamment tel que celui illustré en figure 3.

Un exemple de séquence de fonctionnement du système d'équilibrage et de couplage/parallélisation avec une structure à inductance mutualisée selon l'invention peut être composée des étapes suivantes :
- étape 1 : Réception d'une demande de couplage de plusieurs modules provenant d'un système de gestion de batterie BMS par les moyens de communication 9,
- étape 2 : Réception d'une demande de passage en module maître ou esclave provenant du système de gestion de batterie BMS, la définition du module maître peut être réalisée par identification du module à décharger, par exemple par détection du module le plus chargé : selon un exemple, le BMS de chaque module diffuse sa mesure de tension sur le réseau multiplexé, puis le BMS prend ensuite la décision de passer son module en module esclave si sa tension mesurée est inférieure à celle du second pack ou en module maître si sa tension mesurée est supérieur à celle du second pack ou module,
- étape 3 : Commande d'ouverture des interrupteurs "SWb" au moyen du circuit de commande 6, afin de bloquer la circulation du courant de recharge dans les cellules du module. Par exemple si le module est configuré en maitre, on ne souhaite pas que l'énergie emmagasinée dans l'inductance soit déchargée dans son propre module,
- étape 4 : Commande de fermeture des interrupteurs "SWa ES" pour les modules ou packs identifiés comme esclave et commande de fermeture des interrupteurs "SWa MA" pour le module ou pack identifié comme maitre, la commande étant réalisée par le circuit de commande 6,
- étape 5 : Inhibition des commandes "SW" des modules ou packs identifiés comme esclave,
- étape 6 : Mesure des tensions différentielles des cellules du pack ou module identifié comme maitre,
- étape 7 : Détermination de la cellule la plus chargée du pack ou module identifié comme maître,
- étape 8 : Commande de fermeture des interrupteurs "SW" de la cellule à décharger (le cas échéant la cellule la plus chargée) du pack ou module identifié comme maître, la commande étant réalisée par le circuit de commande 6,
- étape 9 : Décharge de la cellule sélectionnée dans l'inductance jusqu'à un courant Imax choisi (paramètre ajustable) afin de ne pas saturer l'inductance (qui dispose d'un circuit magnétique saturable) car cela pourrait entrainer un dysfonctionnement dangereux et irréversible du système,
- étape 10 : Commande d'ouverture des interrupteurs "SW" de la cellule à la plus chargée sélectionnée au moyen du circuit de commande 6,
- étape 11 : Décharge de l'inductance du module maître en totalité dans toutes les cellules des packs ou modules identifiés comme esclave,
- étape 12 : Itération à partir de l'étape 6 jusqu'à détection de l'équilibrage de toutes les cellules ou jusqu'à réception d'une demande d'arrêt du BMS du module maître.

Selon une variante de réalisation du procédé selon l'invention, les étapes 6 et 7 peuvent être supprimées. Il est alors possible de commander l'interrupteur "SW" de la cellule la plus en amont et celui de la cellule la plus en aval du pack ou module. Dans ce cas l'inductance n'est plus chargée sous la tension d'une cellule mais sous la tension du pack ou du module tout entier. La fonction de mesure des tensions des cellules peut être inhibée avec ce mode de fonctionnement.

## Revendications

1. Système d'équilibrage de la charge d'au moins deux modules (10) de stockage d'énergie électrique couplés, chaque module (10) comprenant au moins une cellule électrochimique (1), des moyens d'équilibrage comprenant au moins un élément de stockage magnétique (2, 11, 12), et des moyens de couplage aux autres modules, **caractérisé en ce que** chaque moyen de couplage comprend des moyens de contrôle (SWa) permettant de contrôler ledit module soit en tant que module maître à décharger, soit en tant que module esclave à charger, de manière à ce que la charge d'au moins une cellule dudit module esclave soit réalisée par la décharge d'au moins une cellule dudit module maître au moyen dudit élément de stockage magnétique (2, 11, 12) dudit module maître.

2. Système selon la revendication 1, dans lequel chaque moyen de contrôle des modules (10) comprend deux commutateurs (MA, ES), la fermeture de chaque commutateur permettant le passage du courant dans un seul sens pour permettre soit la charge, soit la décharge dudit module.

3. Système selon l'une des revendications précédentes, dans lequel ledit système d'équilibrage comprend en outre des moyens de communication (9) entre lesdits modules (10).

4. Système selon l'une des revendications précédentes, dans lequel lesdits moyens de couplage comprennent des contacteurs principaux (CPP, CPN) et un contacteur secondaire (CS).

5. Système selon l'une des revendications précédentes, dans lequel lesdits moyens de couplage comprennent des bornes de connexion (+, -).

6. Système selon l'une des revendications précédentes, dans lequel chaque module comprend en outre un système de gestion de batterie (BMS) qui contrôle l'équilibrage de la charge.

7. Système selon l'une des revendications précédentes, dans lequel lesdits moyens d'équilibrage sont des moyens d'équilibrage à inductance mutualisée (2) qui comprennent des moyens de commutation actionnés (SW, SWb) pour la charge ou la décharge, lesdits moyens de commutation (SW, SWb) étant disposés entre une cellule (1) et ladite inductance mutualisée (2).

8. Système selon l'une des revendications 1 à 6, dans lequel ledit élément de stockage magnétique comprend au moins un transformateur (11, 12).

9. Véhicule hybride ou électrique, notamment véhicule automobile, **caractérisé en ce qu'**il comporte un système d'équilibrage selon l'une des revendications précédentes.

10. Procédé d'équilibrage de la charge d'au moins deux modules (10) de stockage d'énergie électrique couplés, chaque module comprenant au moins une cellule électrochimique (1), des moyens d'équilibrage comprenant au moins un élément de stockage magnétique (2, 11, 12), et des moyens de couplage aux autres modules, **caractérisé en ce qu'**on réalise les étapes suivantes :
a) on identifie au moins un module à charger et un module à décharger ;
b) on contrôle ledit module à décharger en tant que module maître et ledit module à charger en tant que module esclave ; et
c) on effectue l'équilibrage par la charge d'au moins une cellule (1) dudit module esclave par la décharge d'au moins une cellule (1) dudit module maître au moyen dudit élément de stockage magnétique (2, 11, 12) dudit module maître.

11. Procédé selon la revendication 10, dans lequel on identifie ledit module à charger ou à décharger par mesure et comparaison de la tension de chaque module.

12. Procédé selon l'une des revendications 10 ou 11, dans lequel on identifie au moins la cellule (1) la plus chargée dudit module maître et on effectue l'équilibrage au moyen de la charge d'au moins une cellule (1) dudit module esclave par la décharge de ladite cellule la plus chargée dudit module maître.

13. Procédé selon l'une des revendications 10 à 12, dans lequel on contrôle lesdits modules en tant que module esclave et module maître par actionnement de moyens de commutation (SWa) intégrés dans lesdits moyens de couplage de chaque module.

14. Procédé selon l'une des revendications 10 à 13, dans lequel on répète l'étape c) jusqu'à l'équilibrage desdites cellules (1).

## Patentansprüche

1. Ausgleichssystem der Ladung mindestens zweier gekoppelter Speichermodule (10) von elektrischer Energie, wobei jedes Modul (10) mindestens eine elektrochemische Zelle (1) umfasst, wobei Ausgleichsmittel mindestens ein magnetisches Speicherelement (2, 11, 12) und Kopplungsmittel mit den anderen Modulen umfassen, **dadurch gekennzeichnet, dass** jedes Kopplungsmittel Kontrollmittel (SWa) umfasst, die es ermöglichen, das Modul entweder als zu entladendes Mastermodul oder als zu ladendes Slavemodul zu kontrollierten, so dass das Laden mindestens einer Zelle des Slavemoduls durch das Entladen mindestens einer Zelle des Mastermoduls mit Hilfe des magnetischen Speicherelements (2, 11, 12) des Mastermoduls erfolgt.

2. System nach Anspruch 1, bei dem jedes Kontrollmittel der Module (10) zwei Schalter (MA, ES) umfasst, wobei das Schließen jedes Schalters den Durchgang des Stroms in nur eine Richtung ermöglicht, um entweder das Laden oder das Entladen des Moduls zu ermöglichen.

3. System nach einem der vorhergehenden Ansprüche, wobei das Ausgleichssystem ferner Verbindungsmittel (9) zwischen den Modulen (10) umfasst.

4. System nach einem der vorhergehenden Ansprüche, bei dem die Kopplungsmittel Hauptschalter (CPP, CPN) und einen Nebenschalter (CS) umfassen.

5. System nach einem der vorhergehenden Ansprüche, bei dem die Kopplungsmittel Anschlussklemmen (+, -) umfassen.

6. System nach einem der vorhergehenden Ansprüche, bei dem jedes Modul ferner ein Batterieverwaltungssystem (BMS) umfasst, das den Ausgleich der Ladung kontrolliert.

7. System nach einem der vorhergehenden Ansprüche, bei dem die Ausgleichsmittel Ausgleichsmittel mit gemeinsam genutzter Induktivität (2) sind, die Umschaltmittel (SW; SWb) umfassen, die zum Laden oder Entladen betätigt werden, wobei die Umschaltmittel (SW, SWb) zwischen einer Zelle (1) und der gemeinsam genutzten Induktivität (2) angeordnet sind.

8. System nach einem der Ansprüche 1 bis 6, bei dem das magnetische Speicherelement mindestens einen Transformator (11, 12) umfasst.

9. Hybrid- oder Elektrofahrzeug, insbesondere Kraftfahrzeug, **dadurch gekennzeichnet, dass** es ein Ausgleichssystem nach einem der vorhergehenden Ansprüche umfasst.

10. Ausgleichsverfahren des Ladung mindestens zweier gekoppelter Speichermodule (10) von elektrischer Energie, wobei jedes Modul mindestens eine elektrochemische Zelle (1) umfasst, wobei Ausgleichsmittel mindestens ein magnetisches Speicherelement (2, 11, 12) und Kopplungsmittel mit den anderen Modulen umfassen, **dadurch gekennzeichnet, dass** die folgenden Schritte durchgeführt werden:
a) Identifikation mindestens eines zu ladenden Moduls und eines zu entladenden Moduls;
b) Kontrolle des zu entladenden Moduls als Mastermodul und des zu ladenden Moduls als Slavemodul; und
c) Durchführen des Ausgleichs durch das Laden mindestens einer Zelle (1) des Slavemoduls durch das Entladen mindestens einer Zelle des Mastermoduls mit Hilfe des magnetischen Speicherelements (2, 11, 12) des Mastermoduls.

11. Verfahren nach Anspruch 10, bei dem das zu ladende oder zu entladende Modul durch Messen und Vergleichen der Spannung jedes Moduls identifiziert wird.

12. Verfahren nach einem der Ansprüche 10 oder 11, bei dem mindestens die am meisten geladene Zelle (1) des Mastermoduls identifiziert wird, und der Ausgleich mit Hilfe des Ladens mindestens einer Zelle (1) des Slavemoduls durch das Entladen der am meisten geladenen Zelle des Mastermoduls durchgeführt wird.

13. Verfahren nach einem der Ansprüche 10 bis 12, bei dem die Module als Slavemodul und Mastermodul durch Betätigung von Umschaltmitteln (SWa), die in die Kopplungsmittel jedes Moduls integriert sind, kontrolliert werden.

14. Verfahren nach einem der Ansprüche 10 bis 13, bei dem der Schritt c) bis zum Ausgleich der Zellen (1) wiederholt wird.

## Claims

1. A system for balancing the charge of at least two coupled electrical energy storage modules (10), each module (10) comprising at least one electrochemical cell (1), balancing means including at least one magnetic storage element (2, 11, 12), and means for coupling to the other modules, **characterized in that** each coupling means comprises control means (SWa) allowing to control said module either as master module to be discharged or as slave module to be charged, so that the charge of at least one cell of said slave module is achieved through the discharge of at least one cell of said master module by means of said magnetic storage element (2, 11, 12) of said master module.

2. A system as claimed in claim 1, wherein each means for controlling modules (10) comprises two switches (MA, ES), the closing of each switch allowing the current to flow in a single direction so as to allow either charge or discharge of said module.

3. A system as claimed in any one of the previous claims, wherein said balancing system also comprises means (9) enabling communication between said modules (10).

4. A system as claimed in any one of the previous claims, wherein said coupling means comprise main contactors (CPP, CPN) and a secondary contactor (CS).

5. A system as claimed in any one of the previous claims, wherein said coupling means comprise (+, -) connecting terminals.

6. A system as claimed in any one of the previous claims, wherein each module further comprises a battery management system (BMS) that controls balancing of the charge.

7. A system as claimed in any one of the previous claims, wherein said balancing means are shared-inductor balancing means (2) comprising switching means (SW, SWb) actuated for charge or discharge, said switching means (SW, SWb) being arranged between a cell (1) and said shared inductor (2).

8. A system as claimed in any one of claims 1 to 6, wherein said magnetic storage element comprises at least one transformer (11, 12).

9. A hybrid or electric vehicle, notably a motor vehicle, **characterized in that** it comprises a balancing system as claimed in any one of the previous claims.

10. A method for balancing the charge of at least two coupled electrical energy storage modules (10), each module comprising at least one electrochemical cell (1), balancing means including at least one magnetic storage element (2, 11, 12), and means for coupling to the other modules, **characterized in that** the following stages are carried out:
a) identifying at least one module to be charged and one module to be discharged,
b) controlling said module to be discharged as master module and said module to be charged as slave module, and
c) performing balancing by the charge of at least one cell (1) of said slave module through the discharge of at least one cell (1) of said master module by means of said magnetic storage element (2, 11, 12) of said master module.

11. A method as claimed in claim 10, wherein said module to be charged or discharged is identified by measuring and comparing the voltage of each module.

12. A method as claimed in any one of claims 10 or 11, wherein at least the most charged cell (1) of said master module is identified and balancing is performed by the charge of at least one cell (1) of said slave module through the discharge of said most charged cell of said master module.

13. A method as claimed in any one of claims 10 to 12, wherein said modules are controlled as slave module and master module by actuating switching means (SWa) integrated in said coupling means of each module.

14. A method as claimed in any one of cells 10 to 13, wherein stage c) is repeated until balancing of said cells (1) is achieved.
